# EUROPÄISCHE PATENTANMELDUNG

(11) **EP 4 407 203 A1**
(43) Veröffentlichungstag der Anmeldung: **31.07.2024**
(21) Anmeldenummer: 23153982.6
(22) Anmeldetag: 30.01.2023
(51) Int. Cl.: F16D 1/00, F16H 57/04

(54) **WELLE-NABE-VERBINDUNG FÜR EIN GETRIEBE**

(71) Anmelder: Flender GmbH, 46395 Bocholt (DE)
(72) Erfinder: VENNEMANN, Michael, 46395 Bocholt (DE); SPERL, Sabrina, 46395 Bocholt (DE); KÖNIG, Christian, 46395 Bocholt (DE)
(74) Vertreter: Michalski Hüttermann & Partner Patentanwälte mbB

(57) **Zusammenfassung**

Die Erfindung betrifft eine Welle-Nabe-Verbindung 10 für ein Planetengetriebe 2, mit einem inneren Nabenelement 12, einem mit dem inneren Nabenelement 12 über eine Steckverzahnung 16 um eine Hauptrotationsachse A_{R} antriebsverbundenen und das innere Nabenelement 12 außenumfänglich umgebenden äußeren Nabenelement 14, wobei das innere Nabenelement 12 und das äußere Nabenelement 14 über eine Paarung von Axialkontaktflächen 20, 22 aneinander anliegen. Ferner betrifft die Erfindung ein Getriebe 2 mit einer Welle-Nabe-Verbindung 10. Das Getriebe 2 kann in einem Antriebsstrang 76 einer Windkraftanlage 70 zum Einsatz kommen. Bei der der Welle-Nabe-Verbindung 10 muss das Schmieröl nicht gegen die Zentrifugalkraft arbeiten, um zu den Axialkontaktflächen zu gelangen, wie die bei herkömmlichen Lösungen zur Schmierung der Axialkontaktflächen der Fall ist.

## Beschreibung

Die Erfindung betrifft eine Welle-Nabe-Verbindung für ein Planetengetriebe, mit einem inneren Nabenelement, einem mit dem inneren Nabenelement über eine Steckverzahnung um eine Hauptrotationsachse A_{R} antriebsverbundenen und das innere Nabenelement außenumfänglich umgebenden äußeren Nabenelement,
wobei das innere Nabenelement und das äußere Nabenelement über eine Paarung von Axialkontaktflächen aneinander anliegen. Ferner betrifft die Erfindung ein Getriebe mit einer Welle-Nabe-Verbindung.

In Windkraftgetriebe befinden sich in der Regel Planetengetriebe, die mit einer oder mehreren Planetenstufen ausgeführt sein können. Die Verzahnungen der Planetengetriebe sind in der Regel schrägverzahnt ausgeführt. Die Schrägverzahnung führt zu Axialkräften innerhalb einer Planetenstufe, die in der im Kraftfluss nachfolgenden Stufe abgestützt werden müssen. Es gibt bei den Planetengetrieben und den Stufen unterschiedliche Konfigurationen. Es kann in einer ersten Konfiguration beispielsweise vorgesehen sein, dass in einer Planetenstufe der Abtrieb über das Sonnenrad bzw. über eine entsprechende Sonnenwelle, die radial in einer Laufverzahnung gegenüber den Planetenrädern und in einer Steckverzahnung gegenüber einem nachfolgenden Bauteil, beispielsweise einem hohlen Nabenelement einer Stirnradstufe, gelagert ist. Die Sonnenwelle ist hierbei strukturell das innere Nabenelement, während das hohle Nabenelement ein äußeres ist und als Hohlwelle ausgeführt sein kann. Auch kann es einen Aufbau geben, bei dem das äußere Nabenelement unmittelbar, also ohne Zwischenschaltung einer Stirnradstufe, einen nachfolgend angeordneten Generator antreibt. In einer weiteren Konfiguration der Planetenstufen ist die Anordnung von innerem und äußeren Nabenelement beispielsweise derart getroffen, dass die Sonnenwelle bzw. das Sonnenrad einer Planetenstufe als äußeres Nabenelement ausgeführt ist und das innere Nabenelement als Hohlwelle zum Antrieb der nachfolgenden Planetenstufe ausgeführt ist. Das innere Nabenelement kann beispielsweise unmittelbar oder mittelbar mit dem Planetenträger der nachfolgenden Stufe antriebsverbunden sein.

Die axiale Lagerung des einen Nabenelements zur Abstützung der in einer Hauptkraftrichtung eingeleiteten Axialkräfte erfolgt üblicherweise über eine Anlageschulter dieses Nabenelements, die sich gegen eine korrespondierende Anlageschulter des anderen Nabenelements abstützt. Die korrespondierenden Anlageschultern kontaktieren sich hierbei über eine Paarung von Axialkontaktflächen. Eine Anlageschulter kann auch als Wellenbund oder Wellenabsatz bezeichnet werden. In Abhängigkeit der Höhe der Axialkräfte und von Verlagerungen der beteiligten Bauteile kann es zu Verschleiß an den Axialkontaktflächen kommen, wobei einem Verschleiß grundsätzlich durch eine Beölung der Axialkontaktflächen während des Betriebes entgegengewirkt werden kann. Eine Möglichkeit besteht darin, das Öl in axialer Richtung durch die Steckverzahnung zwischen den beiden Nabenelementen zu leiten und den Axialkontaktflächen zuzuführen. Hierbei handelt es sich um ein passives Zuführen von Öl, das seine Grenzen insbesondere in Betriebszuständen mit hohen Drehzahlen findet. Da der unmittelbare Zuführpunkt des Öls zu den Axialkontaktflächen prinzipbedingt radial außerhalb der Axialkontaktflächen liegt, treibt die herrschende Zentrifugalkraft das Öl nach außen und verhindert, dass ausreichend Öl nach radial innen zu den Axialkontaktflächen gelangen kann. Eine weitere Möglichkeit ist in der DE 10 2013 217 950 A1 beschrieben, die die beschriebenen Unzulänglichkeiten des passiven Zuführens von Öl durch eine Druckschmierung löst, die über Ölführungskanäle Schmieröl aktiv an die Axialkontaktflächen fördert. Eine derartige Druckschmierung kann unter den Gesichtspunkten Aufwand und Kosten als nachteilig betrachtet werden. Es besteht ein ständiges Bedürfnis die Beölung der Axialkontaktflächen zu vereinfachen und zu verbessern.

Es ist die Aufgabe der Erfindung Maßnahmen aufzuzeigen, die eine vereinfachte und verbesserte Beölung ermöglichen.

Die Lösung der Aufgabe erfolgt durch eine Welle-Nabe-Verbindung für ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Welle-Nabe-Verbindung für ein Planetengetriebe, umfassend ein inneres Nabenelement, ein mit dem inneren Nabenelement über eine Steckverzahnung um eine Hauptrotationsachse A_{R} antriebsverbundenes und das innere Nabenelement außenumfänglich umgebendes äußeres Nabenelement, wobei das innere Nabenelement und das äußere Nabenelement über eine Paarung von Axialkontaktflächen aneinander anliegen, wobei das innere Nabenelement im Bereich der axialen Position der Axialkontaktflächen zumindest einen umfänglich verteilten und radial gerichteten Ölkanal zur Beölung der Axialkontaktflächen ausbildet.

Die Hauptrotationsachse A_{R} legt vorliegend die Axialrichtung fest, so dass sich aus dieser Axialrichtung die jeweiligen Radialrichtungen ergeben. Die jeweiligen axialen Positionen der Axialkontaktflächen und des zumindest einen radial verlaufenden Ölkanals des inneren Nabenelements stimmen somit weitestgehend überein. Eine im geometrischen Sinne strenge Übereinstimmung der axialen Positionen der Axialkontaktflächen und des oder der Ölkanäle ist nicht zwingend erforderlich.

Das äußere Nabenelement kann je nach zugrundliegender Konfiguration als Hohlwelle oder als Sonnenwelle bzw. Sonnenrad ausgeführt sein. Die Steckverzahnung, die das innere und das äußere Nabenelement zur Übertragung eines Drehmoments formschlüssig miteinander verbindet, kann als Kurzverzahnung bezeichnet werden. Die Verzahnung kann schrägverzahnt ausgeführt sein. Die Nabenelemente können über Lageranordnungen beispielsweise gegenüber einer Getriebegehäusestruktur gelagert sein, wobei eine der Lagerungen dazu ausgebildet ist Axialkräfte aufzunehmen bzw. abzustützen.

Bei dem Ölkanal handelt es sich um eine Durchgangsbohrung, die von einer Innenumfangsfläche des inneren Nabenelements bis zu einer Außenumfangsfläche verläuft. Der Ölkanal muss nicht zwingend einen runden Querschnitt aufweisen; er kann auch oval, eckig oder schlitzartig in seinem Querschnitt ausgeführt sein. Die Anzahl der Ölkanäle kann in Abhängigkeit des Anwendungsfalls variieren. Es ist zweckmäßig, wenn die jeweilige Anzahl Ölkanäle gleichmäßig beabstandet über den Umfang des inneren Nabenelements verteilt sind.

Das innere Nabenelement, bevorzugt hohl ausgeführt, kann zentrisch ein Pitchrohr in sich aufnehmen, durch das elektrische Leitungen hindurchgeführt sind. Zwischen dem Pitchrohr und einem Innenumfang des Nabenelements ist ein Umfangsvolumen vorgesehen, in dem Öl gehalten ist oder in das Öl während eines Betriebs einströmen kann, so dass dieses Öl über die im Betrieb wirkende Zentrifugalkräfte durch den oder die Ölkanäle hindurchgetrieben wird.

Bei der beschriebenen Ausgestaltung der Welle-Nabe-Verbindung muss das Schmieröl zur Beölung der Axialkontaktflächen nicht gegen die Zentrifugalkraft arbeiten, um zu den Axialkontaktflächen zu gelangen, wie dies bei herkömmlichen Lösungen zur Schmierung der Axialkontaktflächen der Fall ist. Vielmehr hilft die Zentrifugalkraft dem Öl zu den Axialkontaktflächen zu gelangen. Die Lebensdauer der Axialkontaktflächen kann durch das gezieltere, verbesserte Einbringen des Schmierstoffs radial innerhalb der Axialkontaktflächen verlängert werden.

In einer besonders die Ölaufnahme durch die Ölkanäle begünstigende Weiterbildung münden die Ölkanäle in einem auf einer Innenumfangsfläche des inneren Nabenelements umfänglich verlaufenden Geometrie. Die Geometrie kann als Einstich, als Nut, als Schulter oder als anderweitig gestaltete Vertiefung gegenüber der Innenumfangsfläche gestaltet sein. Der Innenumfang des Nabenelements hat in einem Grund der Geometrie einen größeren Durchmesser als benachbart. Über die bzw. in der Geometrie sammelt sich infolge der im Betrieb herrschenden Zentrifugalkraft besonders gut das Öl und kann dort auch gehalten werden, bevor es durch die von der Geometrie ausgehenden Ölkanäle nach radial außen abfließt, um zu den Axialkontaktflächen zu gelangen und diese beölt und schmiert. Die innenumfängliche Geometrie bedeutet keine strukturelle Schwächung der Hohlwelle, da im Betrieb der Drehmomentfluss bereits zuvor über die Steckverzahnung auf das Nabenelement geleitet wird. Die Geometrie liegt nicht im Bereich des Drehmomentflusses.

Da in konkreter Ausgestaltung die Axialkontaktfläche des inneren Nabenelements auf einer Radialschulter dieses Nabenelements ausgebildet ist, kann in einer vorteilhaften Ausführung vorgesehen sein, dass die Ölkanäle in Bereich der Radialschulter münden. Als Mündungsbereich kann beispielsweise ein Fußbereich vorgesehen sein. Hierdurch ist es einfach möglich, dass das Öl durch die im Betrieb herrschende Zentrifugalkraft weiter radial nach außen geschleudert wird oder an der Radialschulter nach außen getrieben wird, unmittelbar auf die Axialkontaktfläche bzw. zwischen die Paarung aus Axialkontaktflächen des inneren und des äußeren Nabenelements.

In einer weiterhin bevorzugten Ausgestaltung ist vorgesehen, dass zwischen dem inneren und dem äußeren Nabenelement mit einem axialen Versatz zu den Ölkanälen eine Abdichtung vorgesehen ist. Insbesondere ist die Abdichtung derart positioniert, dass die Ölkanäle zwischen den Axialkontaktflächen einerseits und der Abdichtung andererseits positioniert sind, so dass ein Abfluss des Schmieröls, nachdem es aus den Ölbohrungen ausgetreten ist, zwangsläufig über die Axialkontaktflächen erfolgen muss. Die Abdichtung kann beispielsweise über einen O-Ring erfolgen oder auch eine zwischen innerem und äußerem Nabenelement eingesetzte Kunststoffbuchse.

Bei einer vorteilhaften Ausführung der Axialkontaktflächen ist vorgesehen, dass zumindest auf einer dieser Flächen eine Oberflächenprofilierung aufgebracht ist. Hierdurch wird erreicht, dass sich in den Ölnuten eine gewisse Menge an Schmieröl als Vorrat halten kann, der in Betriebssituationen weiterhin für eine Schmierung sorgt, in denen eine Nachschub von Schmieröl über die Ölkanäle reduziert ist. Hierbei kann die Oberflächenprofilierung derart ausgeführt sein, dass zumindest eine der Axialkontaktflächen mit einer zentralen Balligkeit ausgeführt ist. Alternativ können die Axialkontaktflächen auch kegelig oder konisch zueinander angestellt sein.

Die Radialschulter bzw. Anlageschulter ist bei einer ersten möglichen Ausgestaltung integral von dem inneren Nabenelement ausgebildet und zwar derart, dass das Nabenelement endseitig beispielsweise durch ein Abdrehen bearbeitet ist und sich zwischen dem abgedrehten Durchmesser und dem sich anschließenden Durchmesser die Radialschulter erstreckt. Diese Ausgestaltung ist insbesondere dann vorteilhaft, wenn die durch die Axialkraft bestimmte Hauptkraftrichtung hin zu dem abgedrehten Wellenende gerichtet ist.

In einer weiteren möglichen Ausgestaltung ist die Radialschulter durch einen endseitig an das innere Nabenelement koaxial angesetzten Anlagering gebildet. Die Radialschulter verläuft hierbei zwischen einem Durchmesser des Wellenendes und einem entsprechend größeren Durchmesser des Anlagerings. Diese Ausgestaltung ist insbesondere dann vorteilhaft, wenn die durch die Axialkraft bestimmte Hauptkraftrichtung ausgehend von dem Wellenende, das den Anlagering trägt, entlang der Welle gerichtet ist. Fertigungstechnisch kann vorgesehen sein, dass der Anlagering über eine Verschraubung endseitig an dem Nabenelement gehalten ist. Über diesen mehrteiligen Aufbau ergibt sich, dass in vorteilhafter Weise die Ölkanäle durch auf einer Stirnfläche des Nabenelements und/oder einer Stirnfläche des Anlagerings radial verlaufende Einstiche gebildet sein können. Weiterhin kann hierbei vorgesehen sein, dass die Ölkanäle und der auf einer Innenumfangsfläche des Nabenelements umlaufende Einstich in einer Trennebene zwischen dem Nabenelement und dem Anlagering angeordnet sind, so dass sich hierdurch eine weitere fertigungstechnische Vereinfachung ergibt.

Die Aufgabe wird zudem gelöst durch ein Getriebe für eine Windkraftanlage, bestehend aus mindestens einer Planetenstufe und einem mit der zumindest einen Planentenstufe antriebsverbundenen äußeren Nabenelement, wobei zumindest eine Antriebsverbindung zwischen mehreren Planetenstufen und/oder zwischen der zumindest einen Planetenstufe und dem äußeren Nabenelement als Welle-Nabe-Verbindung wie zuvor beschrieben erfolgt. Insbesondere kann hierbei vorgesehen sein, dass die nachfolgende Planetenstufe gegenüber der vorangestellten Planetenstufe schneller drehend ist.

Die Aufgabe wird auch gelöst durch einen Antriebsstrang für eine Windkraftanlage, umfassend eine Rotorwelle, die drehmomentübertragend mit einem Getriebe verbunden ist und einen mit dem Getriebe drehmomentübertragend verbundenen Generator, wobei das Getriebe wie zuvor beschrieben ausgebildet ist. Darüber hinaus können das Planetengetriebe und der Generator auch ineinander integriert ausgebildet sein, also als ein Generatorgetriebe ausgebildet sein.

Gleichermaßen wird die zugrundeliegende Aufgabe gelöst durch eine Windkraftanlage, umfassend eine Gondel, an der drehbar ein Mehrblattrotor angeordnet ist, der mit einem Antriebsstrang drehmomentübertragend verbunden ist, wobei der Antriebsstrang wie zuvor beschrieben ausgebildet ist.

Die Lösung der zugrundeliegende Aufgabenstellung erfolgt zudem durch ein Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer wie vorstehend beschriebenen Welle-Nabe-Verbindung vorgesehenen Bestandteile, wobei die Datenpakete dazu hergerichtet sind bei einer Verarbeitung durch eine Datenverarbeitungseinrichtung eine additive Herstellung der Bestandteile der Welle-Nabe-Verbindung, insbesondere durch 3D-Druck mittels eines 3D-Druckers, und/oder eine Simulation der Funktionsweise der Welle-Nabe-Verbindung durchzuführen. Dies ermöglicht eine kostengünstige Herstellung von Prototypen und/oder computerbasierten Simulationen, um die Funktionsweise der Welle-Nabe-Verbindung zu studieren, Probleme im konkreten Anwendungsfall zu identifizieren und Verbesserungen zu finden. Ebenso kann das Datenmodell dazu geeignet sein, ein fluiddynamisches Verhalten eines Betriebsstoffs, wie beispielsweise eines Schmierstoffs, nachzubilden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine erste Variante eines strukturellen Aufbaus einer Welle-Nabe-Verbindung;
Fig. 2: eine Detaillierung der Welle-Nabe-Verbindung gemäß Fig. 1;
Fig. 3: eine alternative Ausgestaltung einer Welle-Nabe-Verbindung;
Fig. 4: eine zweite Variante eines strukturellen Aufbaus einer Welle-Nabe-Verbindung;
Fig. 5: eine alternative Ausführung zu der Variante gemäß Figur 4;
Fig. 6: ein Planetengetriebe in einem Antriebsstrang für eine Windkraftanlage und
Fig. 7: eine perspektivische Darstellung einer Windkraftanlage.

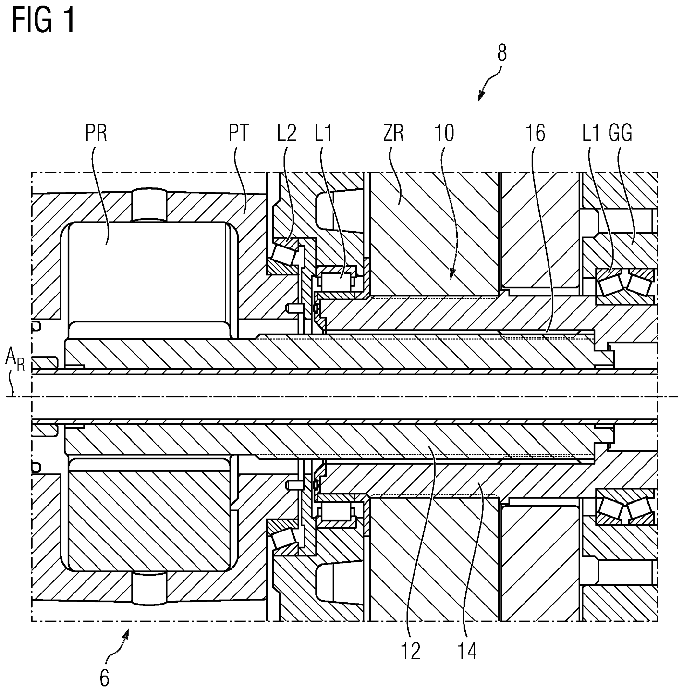

In der Figur 1 ist ein struktureller Aufbau einer möglichen Konfiguration einer Welle-Nabe-Verbindung 10 gezeigt, die bezüglich ihrer Details im Verlauf anhand der weiteren Figuren beschrieben wird. Die Welle-Nabe-Verbindung 10 ist vorliegend als Antriebsverbindung zwischen einer Planetenstufe 6 und einer Stirnradstufe 8 vorgesehen. Von der Planetenstufe 6 ist lediglich ein Planetenradträger PT und der Verzahnungseingriff von Planetenrädern PR mit einem inneren Nabenelement 12 gezeigt, wobei das innere Nabenelement 12 als Sonnenwelle ausgeführt ist. Von der Stirnradstufe 8 ist lediglich ein äußeres Nabenelement 14, welches als Hohlwelle ausgeführt ist, und ein mit diesem drehfest verbundenes Zahnrad ZR gezeigt. Sofern keine Stirnradstufe 8 vorgesehen ist, kann das äußere Nabenelement 14 zumindest mittelbar mit einem nicht dargestellten Generator antriebsverbunden sein. Die Lagerung des äußeren Nabenelements 14 erfolgt über eine Lageranordnung L1 gegenüber einem Getriebegehäuse GG. Über die Lageranordnung L1 können in das äußere Nabenelement 14 eingeleitete Axialkräfte abgestützt werden. Die Lagerung des inneren Nabenelements 12 erfolgt zum einen über eine Steckverzahnung 16, über die das innere Nabenelement 12 mit den außenumfänglich angeordneten äußeren Nabenelement 14 antriebsverbunden ist. Zum anderen erfolgt die Lagerung des inneren Nabenelements 12 mittelbar über eine Lageranordnung L2 des Planetenradträgers PT in dem Getriebegehäuse GG. Eine Drehung der beiden Nabenelemente 12, 14 kann um eine Hauptrotationsachse A_{R} erfolgen. Das innere Nabenelement 12 bzw. die Sonnenwelle ist als Hohlwelle ausgeführt. Dies bietet bei einer Anwendung, in der die Welle-Nabe-Verbindung 10 beispielsweise in einem Planetengetriebe für eine Windkraftanlage zum Einsatz kommt, die Möglichkeit innerhalb der Sonnenwelle 12 ein nicht mitdrehendes Pitchrohr verlaufen zu lassen. Das äußere Nabenelement 14 ist vorliegend auch als Hohlwelle ausgeführt.

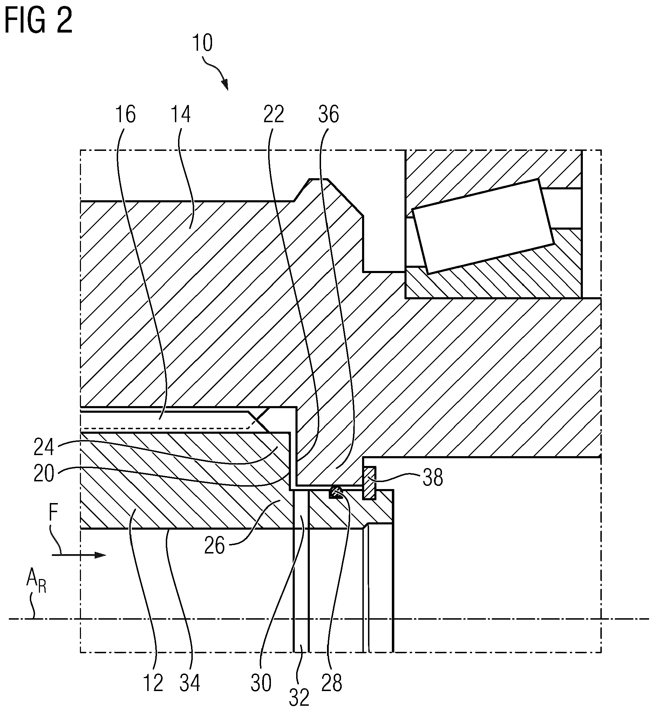

Die Figur 2 zeigt eine Detaillierung der Welle-Nabe-Verbindung 10, insbesondere des Bereichs, in dem sich eine auf das innere Nabenelement 12 wirkende Axialkraft an dem äußeren Nabenelement 14 abstützt. Zu Verdeutlichung ist mit dem Pfeil F eine Hauptkraftrichtung der Axialkraft eingezeichnet. Die Axialkraft entsteht während eines Betriebs durch die in Schrägverzahnung ausgeführten Planetenstufen. Vorliegend ist der Winkel der Schrägverzahnung derart ausgeführt, dass die Hauptkraftrichtung F der Axialkraft in der Darstellung der Figur 2 von links nach rechts zeigt. Das innere Nabenelement 12 und das äußere Nabenelement 14 liegen über eine Paarung von Axialkontaktflächen 20, 22 aneinander an. Über die Axialkontaktflächen 20, 22 stützt sich die Axialkraft ab, die während eines Betriebs in das innere Nabenelement 12 eingeleitet wird. Trotz der formschlüssigen Verbindung zwischen beiden Nabenelementen 12, 14 über die Steckverzahnung 16 kommt es zu Relativbewegungen zwischen der Axialkontaktfläche 20 des inneren Nabenelements 12 einerseits und der Axialkontaktfläche 22 des äußeren Nabenelements 14 andererseits. Um einem hierdurch entstehenden Verschleiß entgegenzuwirken oder diesen zumindest weitestgehend zu reduzieren, ist ein Beölen der Axialkontaktflächen 20, 22 vorgesehen.

Das innere Nabenelement 12 bildet eine Radialschulter 24 aus, auf der sich die Axialkontaktfläche 20 befindet. Das äußere Nabenelement 14 bildet eine korrespondierende Radialschulter 36, auf der sich die Axialkontaktfläche 22 befindet. Die beiden Axialkontaktflächen 20, 22 verlaufen zweckmäßiger Weise bezogen auf die Hauptrotationsachse A_{R} in radialer Richtung. Durch die Lage der beiden Radialschulter 24, 36 ergibt sich eine Montagerichtung des inneren Nabenelements 12 in das äußere Nabenelement 14, die der Hauptkraftrichtung F gleichgerichtet ist. Zur axialen Abstützung einer sich in einem Reversierbetrieb der Planetenstufe der Hauptkraftrichtung F entgegengerichteten Axialkraft ist auf dem inneren Nabenelement 12 ein Sicherungsring 38 gehalten. Der Sicherungsring 38 stützt das Nabenelement 12 gegenüber einer, bezogen auf die Axialkontaktfläche 22, rückwärtigen Flanke der Radialschulter 36 ab.

Das innere Nabenelement 12 bildet im Bereich der axialen Position, bezogen auf die Hauptrotationsachse A_{R}, der Axialkontaktflächen 20, 22 der beiden Radialschulter 24, 36 mehrere umfänglich verteilte und radial gerichtete Ölkanäle 30 zur Beölung der Axialkontaktflächen 20, 22 aus. Die Ölkanäle 30 können als Ölbohrungen beispielsweise mit einem runden Querschnitt ausgeführt sein. Es ist zu erkennen, dass die Ölkanäle 30 unmittelbar oder zumindest annähernd in einem Fußbereich 26 der Radialschulter 24 nach radial außen münden. Nach radial innen münden die Ölkanäle 30 auf einer Innenumfangsfläche 34 der Hohlwelle 12, wobei insbesondere vorgesehen ist, dass eine Innenumfangsfläche 34 die Hohlwelle 12 einen umlaufenden Einstich 32 aufweist und die Ölkanäle 30 in diesem Einstich 32 münden. Über den Einstich 30 ist in verstärktem Maße sichergestellt, dass sich bei einem Betrieb und infolge der herrschenden Zentrifugalkraft Schmieröl sammelt und über die Ölkanäle 30 nach außen getrieben wird, um nach Austritt aus den Ölkanälen 30 zu den Axialkontaktflächen 20, 22 zu gelangen und diese zu beölen. Um nach Austritt des Schmieröls aus den Ölkanälen 30 dieses möglichst vollständig den Axialkontaktflächen 20, 22 zuzuführen, ist zweckmäßiger Weise eine Abdichtung 28 vorgesehen, die zwischen einer Innenumfangsfläche der Radialschulter 36 und des inneren Nabenelements 12 angeordnet ist.

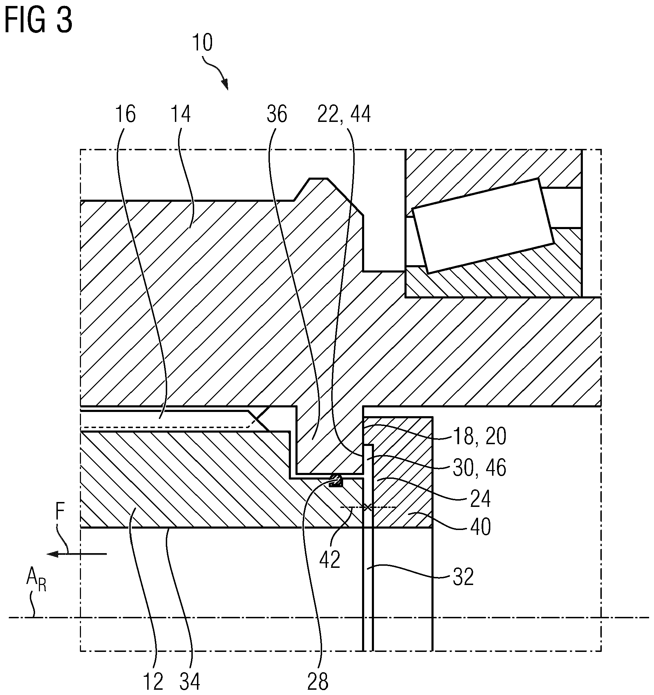

Die Figur 3 zeigt eine alternative Ausgestaltung der Welle-Nabe-Verbindung 10, die insbesondere bei entgegengesetzt gerichteter Hauptkraftrichtung F eingesetzt werden kann. Diese tritt ein, wenn der Winkel der Schrägverzahnung bezogen auf die Hauptrotationsachse A_{R} entgegengesetzt ausgeführt ist. Im Wesentlichen ist das äußere Nabenelement 14 gleich zu der in Figur 2 gezeigten Variante, wobei vorliegend die Axialkontaktfläche 22 auf der entgegengesetzten axialen Flanke angeordnet ist. Korrespondierend hierzu ist die Radialschulter 24 durch einen endseitig an dem inneren Nabenelement 12 angesetzten Anlagering 40 gebildet, wobei Anlagering 40 und Nabenelement 12 koaxial zueinander liegen. Die Axialkontaktfläche 22 des Nabenelements 12 befindet ich auf der der Radialschulter 24 zugewandten Stirnseite 44 des Anlagerings 40. Der Anlagering 40 ist über eine nur angedeutete Verschraubung 42 gegenüber dem Wellenende des Nabenelements 12 verschraubt. Es ist zu erkennen, dass die Ölkanäle 30 durch radiale Einstiche 46 gebildet werden, die auf der Stirnseite 44 des Anlagerings 40 verlaufen. Alternativ oder zusätzlich können die Einstich 46 auch auf einer Stirnfläche 18 des Nabenelements 12 verlaufen, was vorliegend aber nicht dargestellt ist. Die Ölkanäle 30 sind soweit nach radial außen gezogen, dass sie in radialer Richtung die Axialkontaktfläche 22 überdecken.

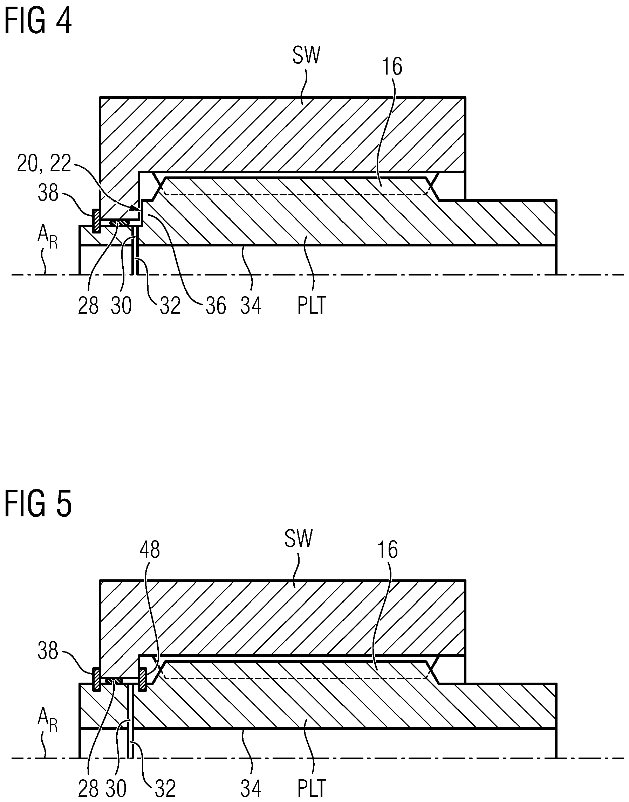

In der Figur 4 ist ein struktureller Aufbau einer weiteren Konfiguration einer Welle-Nabe-Verbindung 10 gezeigt. Die Welle-Nabe-Verbindung 10 ist vorliegend als Antriebsverbindung zwischen einer ersten Planetenstufe 4 und einer zweiten Planetenstufe 6 vorgesehen, welche vorliegend durch die beiden Pfeile und die Bezugszeichen 4 und 6 symbolisiert sind. Von der Planetenstufe 4 ist lediglich eine Sonnenwelle SW gezeigt, wobei die Sonnenwelle als äußeres Nabenelement 14 der Welle-Nabe-Verbindung 10 ausgeführt ist. Von der nachfolgenden Planetenstufe 6 ist lediglich ein Planetenträger PLT schematisch gezeigt, wobei der Planetenträger PLT als inneres Nabenelement 12 der Welle-Nabe-Verbindung 10 ausgeführt ist. Wie zu der Figur 2 beschrieben, ist ein Sicherungsring 38 vorgesehen, die das Nabenelement 12 gegenüber einer, bezogen auf die Axialkontaktfläche 22, rückwärtigen Flanke der Radialschulter 36 abstützt. Im Übrigen wird bezüglich des weiteren strukturellen Aufbaus der Welle-Nabe-Verbindung 10 und bezüglich der Ausgestaltung der Paarung der Axialkontaktflächen 20, 22 und der von radial innen erfolgenden Beölung auf die Beschreibung zu den Figuren 1 bis 3 verwiesen.

Die Figur 5 zeigt eine Alternative des strukturellen Aufbaus der Welle-Nabe-Verbindung 10 der Figur 4. Hierbei ist die Axialkontaktfläche 20, 22 des inneren Nabenelements 12 auf einem das innere Nabenelement 12 umfänglich umgreifenden zweiten Sicherungsring 48 ausgebildet. Im Übrigen wir auch hier auf die Beschreibung zu den Figuren 1 bis 4 verwiesen.

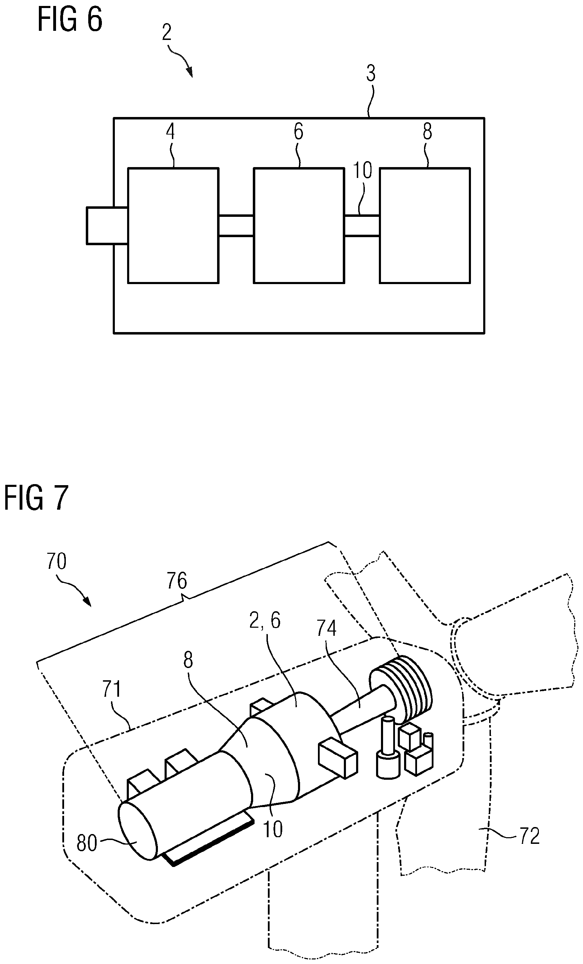

Die Figur 6 zeigt rein exemplarisch ein Planetengetriebe 2, beispielsweise für eine Windkraftanlage. In einem Getriebegehäuse 3 sind einander nachgeschaltet eine erste und zweite umlaufende Planetenstufe 4, 6 und eine Stirnradstufe 8 aufgenommen. Vorliegend ist zwischen der zweiten Planetenstufe 6 und der Stirnradstufe 8 eine Welle-Nabe-Verbindung 10 als Antriebsverbindung vorgesehen. Es kann vorgesehen sein, dass die zweite Planetenstufe 6 gegenüber der ersten Planetenstufe 4 schneller drehend ausgelegt ist.

In der Figur 7 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Planetengetriebe 2, das drehmomentübertragend mit der Hauptwelle 74 verbunden ist. Das Planetengetriebe 2 weist zumindest eine Planetenstufe 6 und eine Stirnradstufe 8 auf und ist mit einem Generator 80 gekoppelt. Vorliegend ist zwischen der Planetenstufe 6 und der Stirnradstufe 8 eine Welle-Nabe-Verbindung 10 als Antriebsverbindung vorgesehen, wobei die Welle-Nabe-Verbindung 10 wie zuvor beschrieben ausgeführt sein kann.

### Bezugszeichenliste

- 2: Planetengetriebe
- 3: Getriebegehäuse
- 4: Planetenstufe
- 6: Planetenstufe
- 8: Stirnradstufe
- 10: Welle-Nabe-Verbindung
- 12: Hohlwelle
- 14: Nabenelement
- 16: Steckverzahnung
- 18: Stirnfläche
- 20: Axialkontaktfläche
- 22: Axialkontaktfläche
- 24: Radialschulter
- 26: Fußbereich
- 28: Abdichtung
- 30: Ölkanal
- 32: Einstich
- 34: Innenumfangsfläche
- 36: Radialschulter
- 38: Sicherungsring
- 40: Anlagering
- 42: Verschraubung
- 44: Stirnseite
- 46: Einstich
- 48: Sicherungsring
- 70: Windkraftanlage
- 71: Gondel
- 72: Mehrblattrotor
- 74: Hauptwelle
- 76: Antriebsstrang
- 80: Generator

## Patentansprüche

1. Welle-Nabe-Verbindung (10) für ein Planetengetriebe (2), umfassend
ein inneres Nabenelement (12),
ein mit dem inneren Nabenelement (12) über eine Steckverzahnung (16) um eine Hauptrotationsachse A_{R} antriebsverbundenes und das innere Nabenelement (12) außenumfänglich umgebendes äußeres Nabenelement (14),
wobei das innere Nabenelement (12) und das äußere Nabenelement (14) über eine Paarung von Axialkontaktflächen (20, 22) aneinander anliegen,
**dadurch gekennzeichnet, dass**
das innere Nabenelement (12) im Bereich der axialen Position der Axialkontaktflächen (20, 22) zumindest einen umfänglich verteilten und radial gerichteten Ölkanal (30) zur Beölung der Axialkontaktflächen (20, 22) ausbildet.

2. Welle-Nabe-Verbindung (10) nach Anspruch 1, **dadurch gekennzeichnet, dass** der zumindest eine Ölkanal (30) in einer auf einer Innenumfangsfläche (34) des inneren Nabenelements (12) umfänglich verlaufenden Geometrie mündet.

3. Welle-Nabe-Verbindung (10) nach Anspruch 2, **dadurch gekennzeichnet, dass** die Geometrie als Einstich (32) oder als Schulter ausgebildet ist.

4. Welle-Nabe-Verbindung (10) nach einem der Ansprüche 1 bis 3, **dadurch gekennzeichnet, dass** die Axialkontaktfläche (20, 22) des inneren Nabenelements (12) auf einer Radialschulter (24) des inneren Nabenelements (12) ausgebildet ist und der zumindest eine Ölkanal (30) in Bereiche (26) der Radialschulter (24) mündet.

5. Welle-Nabe-Verbindung (10) nach Anspruch 4, **dadurch gekennzeichnet, dass** die Radialschulter (24) durch einen endseitig an das innere Nabenelement (12) koaxial angesetzten Anlagering (40) gebildet ist.

6. Welle-Nabe-Verbindung (10) nach Anspruch 5, **dadurch gekennzeichnet, dass** der Anlagering (40) über eine Verschraubung (42) endseitig an dem inneren Nabenelement (12) gehalten ist.

7. Welle-Nabe-Verbindung (10) nach Anspruch 5 oder 6, **dadurch gekennzeichnet, dass** der zumindest eine Ölkanal (30) durch eine auf einer Stirnfläche (18) des inneren Nabenelements (12) und/oder einer Stirnseite (44) des Anlagerings (40) radial verlaufende Geometrie (46) gebildet ist.

8. Welle-Nabe-Verbindung (10) nach den Ansprüchen 2 oder 3 und 5, 6 oder 7, **dadurch gekennzeichnet, dass** der zumindest eine Ölkanal (30) und die umlaufende Geometrie in einer Trennebene zwischen dem inneren Nabenelement (12) und dem Anlagering (40) angeordnet sind.

9. Welle-Nabe-Verbindung (10) nach einem der Ansprüche 1 bis 3, **dadurch gekennzeichnet, dass** die Axialkontaktfläche (20, 22) des inneren Nabenelements (12) auf einem das innere Nabenelement (12) umfänglich umgreifenden Sicherungsring (48) ausgebildet ist.

10. Welle-Nabe-Verbindung (10) nach einem der Ansprüche 1 bis 9, **dadurch gekennzeichnet, dass** zwischen dem inneren Nabenelement (12) und dem äußeren Nabenelement (14) mit einem axialen Versatz zu dem zumindest einen Ölkanal (30) eine Abdichtung (28) vorgesehen ist.

11. Welle-Nabe-Verbindung (10) nach einem der Ansprüche 1 bis 10, **dadurch gekennzeichnet, dass** zumindest auf einer der Axialkontaktflächen (20, 22) eine Oberflächenprofilierung aufgebracht ist.

12. Getriebe (2) für eine Windkraftanlage, bestehend aus mindestens einer Planetenstufe (4) und einem mit der zumindest einen Planentenstufe (4) antriebsverbundenen äußeren Nabenelement (14),
wobei zumindest eine Antriebsverbindung zwischen mehreren Planetenstufen und/oder zwischen der zumindest einen Planetenstufe (4) und dem äußeren Nabenelement (14) als Welle-Nabe-Verbindung (10) nach einem der Ansprüche 1 bis 11 ausgeführt ist.

13. Antriebsstrang (76) für eine Windkraftanlage (70), umfassend eine Rotorwelle (74), die drehmomentübertragend mit einem Getriebe (2) verbunden ist und einen mit dem Getriebe (2) drehmomentübertragend verbundenen Generator (80), **dadurch gekennzeichnet, dass** das Getriebe (2) nach Anspruch 11 oder 12 ausgebildet ist.

14. Windkraftanlage (70), umfassend eine Gondel (71), an der drehbar ein Mehrblattrotor (72) angeordnet ist, der mit einem Antriebsstrang (76) drehmomentübertragend verbunden ist, **dadurch gekennzeichnet, dass** der Antriebsstrang (76) nach Anspruch 13 ausgebildet ist.

15. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer Welle-Nabe-Verbindung (10) nach einem der Ansprüche 1 bis 11 vorgesehenen Bestandteile, wobei die Datenpakete dazu hergerichtet sind bei einer Verarbeitung durch eine Datenverarbeitungseinrichtung eine additive Herstellung der Bestandteile der Welle-Nabe-Verbindung (10), insbesondere durch 3D-Druck mittels eines 3D-Druckers, und/oder eine Simulation der Funktionsweise der Welle-Nabe-Verbindung (10) durchzuführen.
